# EUROPÄISCHE PATENTSCHRIFT

(11) **EP 2 812 899 B1**
(45) Veröffentlichungstag und Bekanntmachung des Hinweises auf die Patenterteilung: **10.04.2019**
(21) Anmeldenummer: 13704056.4
(22) Anmeldetag: 06.02.2013
(51) Int. Cl.: H01F 1/00

(54) **MAGNETISCH ABTRENNBARE MIKROPARTIKEL MIT EINER SILIKATISCHEN HÜLLE, VERFAHREN ZU IHRER HERSTELLUNG SOWIE IHRE VERWENDUNG**
MAGNETIC SEPARABLE MICROPARTICLES WITH A SILICATE SHELL, THEIR PRODUCTION PROCESS AS WELL AS THEIR USE
MICROPARTICULES MAGNÉTIQUES SÉPARABLES AVEC UNE COQUE SILICEUSE, LEUR PROCÉDÉ DE PRODUCTION AINSI QUE LEUR UTILISATION

(30) Priorität: 07.02.2012 DE 102012201774
(43) Veröffentlichungstag der Anmeldung: 17.12.2014
(73) Patentinhaber: Fraunhofer Gesellschaft zur Förderung der angewandten Forschung e.V., 80686 München (DE)
(72) Erfinder: MANDEL, Karl-Sebastian, 86984 Prem (DE); HUTTER, Frank, 80798 München (DE); GELLERMANN, Carsten, 97218 Gerbrunn (DE)
(74) Vertreter: Strehl Schübel-Hopf & Partner
(86) Internationale Anmeldenummer: PCT/EP2013/052310
(87) Internationale Veröffentlichungsnummer: WO 2013/117583

(56) Entgegenhaltungen:
- EP-A1- 2 184 262
- WO-A1-98/31461
- US-B1- 6 638 494
- K. MANDEL ET AL: "Stabilisation effects of superparamagnetic nanoparticles on clustering in nanocomposite microparticles and on magnetic behaviour", JOURNAL OF MAGNETISM AND MAGNETIC MATERIALS, Bd. 331, 1. April 2013 (2013-04-01), Seiten 269-275, XP055069464, ISSN: 0304-8853, DOI: 10.1016/j.jmmm.2012.11.053

## Beschreibung

Die Erfindung betrifft neuartige Partikel, die sich mit Hilfe von Magnetfeld-Gradienten aus flüssigen Medien abtrennen lassen und eine gegenüber den bekannten Partikeln verbesserte Stabilität sowie vergrößerte Oberfläche aufweisen.

Magnetisch abtrennbare Partikel können für verschiedene Zwecke in Fluiden eingesetzt werden, z. B. zur Rückgewinnung von Stoffen, zur Abtrennung von Molekülen für analytische oder präparative Zwecke, in der Biochemie und Medizintechnik und dergleichen. Dazu werden Kompositpartikel verwendet, die aus in einer Matrix eingebetteten oder mit einer Beschichtung versehenen, magnetischen oder magnetisierbaren (meist superparamagnetischen) Nanopartikeln bestehen. Superparamagnetisch sind Teilchen in einer Größenordnung, die ohne Anlegen eines äußeren Magnetfelds eine mittlere Magnetisierung von null besitzen, sich in einem äußeren Magnetfeld jedoch wie ein echtes ferromagnetisches Material verhalten. Beim Abschalten des äußeren Feldes verbleibt aber keine remanente Magnetisierung der Partikel, welche sich dann wieder nicht-magnetisch verhalten (siehe z.B. G. Schmidt, Nanoparticles from theory to applications (2004), WILEY-VCH Verlag GmbH & Co. KGaA, Weinheim, S. 222). Beispiele für ein solches Material sind z. B. die Eisenoxide Magnetit (Fe₃O₄) und Maghemit (γ-Fe₂O₃).

Magnetische oder magnetisierbare Teilchen der eingangs genannten Art werden aus mehreren Gründen oberflächenbeschichtet bzw. in eine Matrix eingebettet: Die Teilchen selbst sind oft derart klein, dass sie kolloidal vorliegen. In kolloidaler Form können sie jedoch nicht durch Anlegen eines Magnetfeldes abgetrennt werden. Außerdem sind sie häufig in den Medien nicht stabil, die für die jeweiligen biologischen, biochemischen oder diagnostischen Zwecke eingesetzt werden müssen. Eine Oberflächenbeschichtung bzw. Matrix soll daher vor Oxidationsprozessen und anderen Angriffen dieses Mediums schützen. Und schließlich kann eine Oberflächenbeschichtung bzw. Matrix mit funktionellen Gruppen versehen werden, die die Teilchen für spezifische Zwecke anwendbar macht. Einen Überblick über mögliche Beschichtungsmaterialien gibt das Review von D. Horäk, M. Babic, H. Mackovä, M. J. Beneš, Review: Preparation and properties of magnetic nano- and microsized particles for biological and environmental separations, J. Sep. Sci. 30 (2007), 1751 - 1772). Dieses Review erwähnt auch die Möglichkeit, die Oberfläche von - unbeschichteten - magnetischen Partikeln mit Komplex- bzw. Chelatbildnern zu modifizieren. Hier besteht allerdings die Gefahr, dass eine zu starke Bindung die Teilchen teilweise auflöst oder zumindest ihre Struktur verändert.

Dagegen können alle genannten Anforderungen dem Grunde nach beispielsweise durch eine SiO₂-Schicht erfüllt werden. Magnetisierbare Partikel für biochemische und medizinische Zwecke, die in eine Matrix aus SiO₂ oder Polymer mit unterschiedlichen Oberflächenmodifikationen eingebettet sind, sind im Handel erhältlich. Für ihre Herstellung sind nasschemische Synthesen gebräuchlich. Dabei werden die in manchen Fällen superparamagnetischen Nanopartikel (Magnetit (Fe₃O₄) und/oder Maghemit (γ-Fe₂O₃)) z.B. mit einer Beschichtung aus Kieselsäure-Derivaten (Natriumsilikat oder Wasserglas) bei pH 10 versehen oder durch z.B. saure Hydrolyse von Tetraethoxysilan (TEOS) bei 90°C in Glycerin und Eisessig (I. J. Bruce, J. Taylor, M. Todd, M. J. Davies, E. Borioni, C. Sangregorio, T. Sen, Synthesis, characterisation and application of silica-magnetite Nanocomposites, J. Magn. Magn. Mater. 284 (2004), 145-160) in eine daraus entstehende Siliciumdioxid-Matrix eingebettet. Die Säurestabilität derart erhaltener Teilchen ist jedoch nicht ausreichend hoch: in 8,6 M HCl (konzentrierte Salzsäure zu Wasser im Verhältnis 3:1) sind alle beschichteten Teilchen spätestens nach 4 Minuten und damit nach nur der doppelten Zeit wie unbeschichtete Magnetit-Teilchen aufgelöst. Auch andere Autoren beschichteten magnetisierbare Teilchen durch hydrolytische Kondensation mit TEOS. Dabei entstanden meistens relativ kleine Nanopartikel (z.B. mit einem Durchmesser von nur 8 nm und einer Beschichtung von nur 2 nm, siehe D. Y. Ju, P. Bian, G. L. Qing, D. Lu, H. He, Magnetite Nanoparticles Surface Coating SiO2 and Magnetic Properties Evaluation, Key Eng. Mater. 368-372 (2008), 1366-1369). Z. Ma et al. (Z. Ma, Y. Guan, H. Liu, Superparamagnetic silica nanoparticles with immobilized metal affinity ligands for protein adsorption, J. Magn. Magn. Mater. 301 (2006), 469-477) erhielten auf diesem Weg - bei Reaktionszeiten von 12 Stunden - sehr gleichmäße, sphärische Partikel mit einem durchschnittlichen Durchmesser von 190 nm. Wenn die Beschichtung mit Hilfe von TEOS erfolgt, wird meist der sog. Stöber-Prozess eingesetzt, bei dem Ammoniak zur Fällung verwendet wird, siehe z.B. C.Y. Haw, C.H. Chia, S. Zakaria, F. Mohamed, S. Radiman, C.H. Teh, P.S. Khiew, W.S. Chiu, N.M. Huang, Morphological studies of randomized dispersion magnetite nanoclusters coated with silica, Ceramics International 37 (2011), 451-464). Diese Forschergruppe versetzte im Übrigen die magnetisierbaren Teilchen vor dem Beschichten mit Trinatriumcitrat, um deren Dispergierbarkeit zu verbessern.

In EP 2 184 262 A1 wird die Herstellung von mit TEOS beschichteten Ferrit-Teilchen beschrieben. In den ersten Schritten werden dabei aus Eisentrichlorid und Natriumoleat sowie Ölsäure in Octadecan Ferritpartikel erzeugt, die mit Ölsäure belegt sind. In weiteren Schritten wird die Ölsäure erst gegen Thioäpfelsäure und sodann gegen Zitronensäure ausgetauscht. Die mit Zitronensäure belegten Ferritpartikel werden zuletzt in ammoniakalischer Lösung mit TEOS versetzt.

Superparamagnetische, poröse Teilchen, die bis zu einem gewissen Grad (in 1N Salzsäure) säurestabil sind, sind in EP 0961653 B1 offenbart. Die Poren der Teilchen verleihen diesen wegen der damit verbundenen Sorptionseigenschaften teils Vorteile, teils aber auch Nachteile. Außerdem ist die Stabilität dieser Teilchen für eine Reihe von Anwendungen nicht ausreichend. Hergestellt werden sie aus einer Aufschlämmung von magnetischen Kern-Teilchen, zu der Natriumsilikat sowie Säure zugegeben wird. Ein ähnliches Herstellungsverfahren, allerdings auch unter Einsatz eines kolloidalen Ferrofluids, wird in DE 43 07 262 A1 vorgeschlagen, ohne dass Beispiele zeigen, mit welchen Maßnahmen man die genannten Teilchen tatsächlich erhalten könnte.

Ebenfalls säurestabil sollen die Partikel gemäß WO 98/51435 sein. Sie enthalten einen Kern aus einem magnetischen Komposit-Material und besitzen einen definierten Durchmesser zwischen 0,03 und 2,0 µm. Eine Auflösungszeit in 12N HCl von mehr als einer Stunde wird als Indikator für eine relativ dichte Beschichtung angesehen. Konkret festgestellt wurde eine Stabilität der Teilchen in diesem Medium von "mehr als 45 Minuten".

Magnetische Teilchen mit extrem hohen Oberflächen lassen sich nach der Lehre der WO 01/71732 A2 herstellen. Die eingesetzten Magnetpartikel haben einen Durchmesser im Bereich von 75 bis 300 nm. Ausgangsmaterialien für die Beschichtung sind TEOS oder Natriumsilicat; die Teilchen werden nach ihrer Abtrennung thermisch nachbehandelt, teilweise bei sehr hohen Temperaturen. Die erhaltenen Teilchen haben einen Durchmesser von 25 µm. Die großen Oberflächen sind eine Folge der hohen Porosität der Teilchen, die hinsichtlich ihrer äußeren Form ansonsten einigermaßen kompakt anfallen. In der Druckschrift wird zwar auch auf die Eigenschaften von superparamagnetischen Teilchen verwiesen; der Durchmesser der tatsächlich eingesetzten Magnetpartikel ist für ein solches Verhalten jedoch zu hoch. Dies hat zur Folge, dass sich die Teilchen nach der Magnetisierung häufig nicht mehr gut resuspendieren lassen, auch wenn die Beschreibung erläutert, die Remanenz sei so gering, dass eine Agglomeration oder Aggregation nicht beobachtet werde.

Daneben sind noch Laborverfahren für den Aufbau der SiO₂-Matrix publiziert. So können mit einem lonentauscherprozess in einer Wasserglaslösung magnetische Nanopartikel in eine SiO₂-Matrix eingeschlossen werden (siehe Bruce et al., a.a.O.) Dieser Prozess erfordert neben dem Austauscher weitere Chemikalien und eine sehr präzise Kontrolle des pH-Wertes; letzterer muss in mehreren Prozessschritten variiert werden.

Weiterhin ist die Herstellung magnetischer Suspensionen bekannt, in denen die magnetischen Partikel in kolloidaler Form vorliegen. Die Peptisierung der Teilchen erfolgt hier meistens mit Hilfe von Detergentien wie Natriumoleat oder Dodecylamin, oder mit TetramethylammoniumHydroxid im Alkalischen oder mit Säure und Wasser (R. Massart, Preparation of Aqueous Magnetic Liquids in Alkaline and Acidic Media, IEEE Transactions on Magnetics 17 (1981), 1247). Vor kurzem wurde ein Herstellungsverfahren publiziert, bei dem die magnetischen Teilchen in agglomerierter Form präzipitiert und anschließend mit Salpetersäure in ein Sol überführt wurden, das durch die Zugabe eines Kammpolymeren mit einem Polycarboxylat-Rückgrat und Polyethylenoxid-Seitenketten stabilisiert wurde (K. Mandel, F. Hutter, C. Gellermann, G. Sextl, Colloids and Surfaces A: Physicochem. Eng. Aspects 390 (2011) 173-178).

Gemäß WO 02/09125 A1 werden sphärische, magnetische Silica-Partikel durch Vermischen eines magnetischen Kolloids oder Ferrofluids oder von Magnetopartikeln mit einem durch Säurekatalyse aus Silanen gebildeten Silica-Hydrosol und Dispergieren dieser Mischung in einer mit Wasser nicht mischbaren organischen Phase unter Vernetzen durch Zugabe einer Base hergestellt. Laut WO 2005/05281 A2 entstehen dabei Gel-Partikel, bei denen es sich um Hydrogele handelt, die aufgrund ihres hohen Wassergehalts sehr polar und hydrophil sind. Die durch das Verfahren von WO 02/09125 erzielbare Steuerung der Hydrolyse und Polykondensation reiche nicht aus, um mit Hilfe der erzeugten Poren eine solche Oberflächenvergrößerung herbeizuführen, dass die Teilchen wie gewünscht eine signifikante Menge an Nukleinsäure binden können. Deswegen muss laut WO 2005/05281 A1 dem Silica-Sol vor der Suspendierung ein vorgefertigtes SiO₂-Kolloid zugesetzt werden, dessen Teilchengrößen zwischen 50 und 500 nm liegen.

Die Oberfläche derartiger Partikel kann für die jeweilige spezielle Anwendung entsprechend modifiziert sein, wie sich aus dem Stand der Technik ergibt.

TEOS ist eine relativ teure Si-Verbindung, und der Beschichtungsvorgang benötigt in der Regel organische Lösungsmittel, was zusätzliche Kosten und Sicherheitsmaßnahmen verursacht, und dauert meist viele Stunden. Nachteilig an den meisten der bisherigen Verfahren sind jedoch nicht nur die teuren Ausgangsmaterialien und die Kosten der Verfahrensführung, die Vielzahl der auszuführenden Schritte, die Empfindlichkeit der Methoden gegenüber geringen Abweichungen im pH-Wert und der Konzentration oder der Zeitaufwand der Herstellung. Nachteilig ist auch, dass die erhaltenen Teilchen manchmal zu klein und nicht ausreichend dicht umhüllt anfallen, aufgrund ihrer kompakten Struktur häufig eine zu geringe Oberfläche aufweisen - was für spätere Anwendungen der Partikel für Anbindung von Stoffen nachteilig ist - oder aber ihre große Oberfläche einem hohen Porenvolumen verdanken, was eine schlechte Wiederverwertbarkeit zur Folge hat. Schließlich weisen fast alle bekannten Teilchen eine unzureichende chemische Stabilität gegenüber den benötigten Medien auf, insbesondere keine ausreichende Säure- und gleichzeitig Basenstabilität. Zudem sind TEOS-Synthesen Batch-Synthesen und ihre Aufskalierbarkeit stark begrenzt, da i.d.R. keine kontinuierlichen Herstellungsverfahren möglich sind.

Die vorliegende Erfindung hat es sich zur Aufgabe gemacht, diese Nachteile zu überwinden.

Sie stellt demnach magnetisch abtrennbare Mikropartikel bereit, umfassend Nanopartikel mit reversiblen magnetischen Eigenschaften in einer Matrix, wobei jedes der abtrennbaren Partikel eine Mehrzahl von Nanopartikeln mit reversiblen magnetischen Eigenschaften (mit Durchmessern von in der Regel weit unter 50 nm, meist im Bereich von etwa bis zu 30 nm und vorzugsweise im Bereich von etwa 10 nm) aufweist und wobei der anorganische Anteil der Matrix zwischen 70 und 100 Gew.-% des Matrix-Gewichts beträgt und zu 80 bis 100 Gew.-% aus SiO₂ besteht, dadurch gekennzeichnet, dass
a. die Partikel einen durchschnittlichen Durchmesser in wenigstens einer Richtung von mindestens 5 µm aufweisen,
b. die Partikel eine Oberfläche (gemäß BET-Messung) von mindestens 10 m²/g und stärker bevorzugt von mindestens 20 m²/g besitzen,
c. die Partikel ein (kumulatives) Porenvolumen von weniger als 0,195 cm³/g (ml/g), bevorzugt im Bereich von 0,15 und 0,005 cm³/g und stärker bevorzugt im Bereich von 0,1 und 0,01 cm³/g besitzen,
d. ein Verlust an Material aus den magnetischen oder magnetisierbaren Nanopartikeln von weniger als 2 Gew.-% bei 12-stündigem Rühren der magnetisch abtrennbaren Partikel in sauren und alkalischen Lösungen mit einem pH-Wert von 1 bzw. von 12 eintritt.

Unter dem Ausdruck "reversible magnetische Eigenschaften" soll erfindungsgemäß zu verstehen sein, dass die Teilchen bei Raumtemperatur superparamagnetisch in dem Sinne sind, dass die remanente Magnetisierung im Rahmen der Messungenauigkeit vorzugsweise 0 beträgt bzw. maximal 0.5% der Sättigungsmagnetisierung, d.h. der Magnetisierung, die das Material erreicht, wenn ein äußeres Feld angelegt wird und das Material vollständig magnetisiert ist. Die Blocking-Temperatur des Materials für diese Teilchen sollte vorzugsweise bei ca. 180K (etwa -93°C) liegen. Ab dieser Temperatur kann die magnetische Orientierung der Partikel "frei rotieren"; sie ist daher ein gewisses Kriterium für den Superparamagnetismus der Teilchen bei Raumtemperatur.

Die Erfindung stellt darüber hinaus ein Verfahren zum Herstellen solcher Partikel bereit, umfassend die Schritte:
a. Bereitstellen eines fluiden magnetischen Sols, das durch Absenkung des pH-Wertes mit Hilfe des Zusatzes einer vorzugsweise anorganischen Säure wie HCl oder HNO₃ auf einen Wert von nicht über pH 2,5, vorzugsweise von nicht über 2,0, peptisiert wurde, wobei die Verwendung von HNO₃ bevorzugt ist;
b. Stabilisieren des Sols durch Zugabe eines organischen, komplexierenden Agens,
c. Zugabe von Ammoniak oder einer Verbindung, die mindestens eine Aminfunktion aufweist oder bei Einwirkung von thermischer Energie eine solche freisetzt, zu dem stabilisierten Sol in einer Menge, dass - ggf. nach Einwirkung der erforderlichen thermischen Energie - ein pH-Wert von mindestens 9, vorzugsweise von mindestens 10 erreicht wird; und
d. Bewirken einer Fällung der magnetisch abtrennbaren Partikel durch Zugabe eines Siliciumdioxid bildenden Agens zu dem stabilisierten Sol,
   wobei das organische komplexierende Agens derart ausgewählt ist, dass sich nach Zugabe des Ammoniak gemäß Schritt c. ein gemessener hydrodynamischer Radius der im Sol befindlichen Partikel im Bereich von 200 bis 2000 nm, vorzugsweise von 500 bis 2000 nm einstellt.

Für das fluide magnetische Sol können beliebige Materialien mit reversiblen magnetischen Eigenschaften eingesetzt werden, die der Fachmann kennt (siehe z.B. D. Horäk et al., a.a.O.) Besonders geeignet sind Materialien, die Eisen in unterschiedlichen Oxidationsstufen enthalten, beispielsweise verschiedene Eisenoxide, Eisen in nicht-oxidierter Form und Eisencarbide (siehe z.B. I. K. Herrmann, R. N. Grass, D. Mazunin, W. J. Stark, Synthesis and Covalent Surface Functionalization of Nonoxidic Iron Core-Shell Nanomagnets, Chem. Mater. 21 (2009), 3275-3281). Darunter wiederum sind Eisenoxide und Ferrite (mit der Summenformel MO∗Fe₂O₃) besonders bevorzugt, siehe z.B. D. Horák et al., a.a.O. Die wichtigsten dieser Materialien sind Magnetit (Fe₃O₄, auch als FeO∗Fe₂O₃ bezeichnet) und Maghemit, γ-Fe₂O₃

Eisenoxid-Nanopartikel mit reversiblen magnetischen Eigenschaften werden beispielsweise nach bekannter Methode (R. Massart, Preparation of Aqueous Magnetic Liquids in Alkaline and Acidic Media, IEEE Transactions on Magnetics 17 (1981), 1247) durch eine Cofällung von Eisen(II)- und Eisen(III)-Salzen in alkalischer (z.B. ammoniakalischer) Lösung hergestellt. Die 5 bis 15 nm großen Partikel liegen zunächst als ca. 1 bis 200 µm große Agglomerate vor. Die Agglomerate können in vorteilhafter Weise mit einem Magneten abgetrennt und mehrfach mit destilliertem Wasser gewaschen werden. Anschließend werden sie durch Zugabe von verdünnter HNO₃ (mit einer molaren Menge im Bereich der molaren Eisenmenge) durch Peptisierung auf Nanometergröße dispergiert, siehe K. Mandel et al., a.a.O. Es resultiert ein Eisenoxid-Sol, das alle Eigenschaften eines Ferrofluids zeigt.

Das fluide magnetische Sol ist in der Regel ein wässriges Sol, d.h. es enthält Wasser, wobei Wasser ggf. das einzige vorhandene Lösungsmittel sein kann, aber nicht sein muss; andere mit Wasser mischbare organische Lösungsmittel dürfen je nach Herstellungsverfahren ebenfalls vorhanden sein.

Zur weiteren Stabilisierung dieses - oder eines vergleichbaren anderen - Sols wird ein komplexierendes Agens mit den oben genannten Eigenschaften zugesetzt. Ohne eine solche Stabilisierung entstehen bei einer nachfolgenden Fällung gemäß den Schritten c. und d. Teilchen mit einer extrem breiten Durchmesserverteilung im Bereich von 1 bis mehr als 200 µm. Der Zusatz des organischen komplexierenden Agens' hat jedoch zur Folge bzw. wird so gewählt, dass bei der nachfolgenden pH-Erhöhung (auf mindestens pH 9) sich im Schritt c. ein messbarer hydrodynamischer Radius der Partikel im Bereich von 200 bis 2000 nm, vorzugsweise im Bereich von 500 bis 2000 nm, stärker bevorzugt im Bereich von etwa 800 bis 1200 und ganz besonders bevorzugt von etwa 1000 nm einstellt, wodurch eine Agglomeration der Nanopartikel verhindert wird. Der hydrodynamische Radius lässt sich mittels dynamischer Lichtstreuung (dynamic light scattering, DLS) bzw. Photonenkorrelationsspektroskopie (PCS) ermitteln, einer dem Fachmann wohl vertrauten Methode. Geeignet als komplexierende Agentien mit den genannten Eigenschaften sind alle organischen Reagentien, die Eisen in wässriger Lösung komplexieren können und mindestens zwei zur Komplexbildung geeignete funktionelle Gruppen wie z.B. Hydroxygruppen, Ketogruppen oder Carbonsäuregruppen enthalten. Dabei ist die Anzahl der genannten funktionellen Gruppen angemessen zu wählen und sollte vorzugsweise bei maximal 8 liegen. Es hat sich nämlich gezeigt, dass dann, wenn als organische Reagentien Polymere eingesetzt werden, die eine Vielzahl (z.B. mehr als 20 oder 30) zur Komplexbildung geeignete funktionelle Gruppen aufweisen, die anschließend gebildeten Mikro-Kompositpartikel mit SiO₂ nicht ausreichend stabil sind. Sie sind zu klein, und die enthaltenen magnetisierbaren Nanopartikel lassen sich zu leicht daraus auswaschen. Vorzuziehen sind deshalb monomere oder oligomere Verbindungen wie Hydroxycarbonsäuren mit 1 bis 3 Hydroxy- und 1 bis 3 Carbonsäurefunktionen, Di- oder Oligocarbonsäuren und auch Bis- oder Oligoalkohole mit maximal 8, vorzugsweise maximal 6 zur Komplexbildung geeigneten funktionellen Gruppen. Gut geeignet sind Hydroxycarbonsäuren mit insgesamt 2 oder 3 funktionellen Gruppen, Di- oder Tricarbonsäuren und Bis- oder Trisalkohole. Milchsäure oder Äpfelsäure sind besonders bevorzugt. Hinsichtlich weiterer als organische komplexierende Agentien einsetzbarer Substanzen lässt sich im Zweifel sehr einfach feststellen, ob ein solches Agens geeignet ist oder nicht, denn nach Zugabe dieses Agens' muss nur der hydrodynamische Radius der in Schritt c. erhaltenen, im Sol befindlichen Partikel ermittelt werden, um dessen Eignung feststellen zu können.

Die Stabilisierung ist dann besonders wirkungsvoll für die Zwecke der vorliegenden Erfindung, wenn das komplexierende Agens in wenigstens dreifachem, vorzugsweise wenigstens sechsfachem molaren Überschuss im Verhältnis zu den in den Nanopartikeln enthaltenen Metall-, insbesondere Eisenatomen zugegeben wird.

Anschließend wird Ammoniak und/oder eine Verbindung zugegeben, die mindestens eine Aminfunktion aufweist oder eine solche Funktion bei Einwirkung von Wärme freisetzt. Ammoniak ist dabei bevorzugt. Wenn eine andere Amino-Verbindung gewählt wird, kommt es auf deren Art dem Grunde nach nicht an, sofern sie mit dem Lösungsmittel des Sols mischbar ist und sich durch ihre Zugabe der angegebene pH-Wert erreichen lässt. Beispiele sind kurzkettige Amine, (insbesondere solche mit nicht mehr als 1 bis 4 Kohlenstoffatomen) wie Methylamin oder Diethylamin, Diamine wie Tetraethylendiamin, Hydroxyamine oder Harnstoff. Dabei ist es günstig, wenn die Menge an Ammoniak bzw. Amin in der wässrigen Lösung im molaren Überschuss, bezogen auf das Anion der vorzugsweise anorganischen Säure (NO₃⁻; Cl⁻), vorliegt. Aufgrund der vorherigen Zugabe des komplexierenden Agens enthält die ammoniakalische Dispersion "Sol"-Teilchen, die nur leicht agglomeriert sind und in einer Größenordnung von 200 nm bis 2000 nm vorliegen, was diese Dispersion hinreichend stabil macht, auch unter Rühren. Ohne den Zusatz des komplexierenden Agens würde dagegen eine starke Agglomeration zu beobachten sein.

Dann wird das Sol vorzugsweise erwärmt, insbesondere auf 50 bis 90°C und besonders bevorzugt auf maximal ca. 80°C. Die dabei eingeführte thermische Energie bewirkt in dem Fall, in dem anstelle von Ammoniak oder einer eine Aminogruppen enthaltenden Verbindung eine Verbindung zugegeben wurde, aus der erst unter der Einwirkung dieser Energie eine Aminogruppe freigesetzt wird, die erforderliche Erhöhung des pH-Wertes erst zu diesem Zeitpunkt.

Im nächsten Schritt wird ein Siliciumdioxid bildendes Agens zugesetzt. Hierunter fallen zum ersten Silane mit vorzugsweise vier einer hydrolytischen Kondensation zugänglichen Gruppen, insbesondere Alkoxygruppen. Das bereits oben erwähnte TEOS gehört hierzu. In Einzelfällen können auch Silane mit über Kohlenstoff an das Silicium gebundenen Resten wie ggf. mit funktionellen Gruppen modifizierte Alkyltrialkoxysilane eingesetzt werden, z.B. in Mischung mit einem Tetraalkoxysilan. Als Lösungsmittel für diesen Schritt dient in der Regel ein Alkohol. Die zweite Gruppe dieser Agentien, die gegenüber der die Silane umfassenden Gruppe bevorzugt ist, weil sie mit einer wesentlich schnelleren Umsetzung verbunden und wesentlich kostengünstiger ist, wobei das Herstellverfahren darüber hinaus auch in einem kontinuierlichen Prozess erfolgen kann, umfasst wasserlösliche Silicate (in der Regel ein Alkalisilicat, z.B. Natrium- oder Kaliumsilicat). Deren Zusammensetzung, d.h. das Verhältnis von Alkali zu Silicium, ist nicht beschränkt. Günstig ist beispielsweise eine Wasserglaslösung der Zusammensetzung SiO₂:Na₂O = 3:1. Die Verdünnung des zugegebenen wassergelösten Silikats ist dem Grunde nach nicht kritisch; sie kann jedoch in einer Reihe von Fällen für die wohldefinierte Partikelbildung von Bedeutung sein. Günstig ist eine 0,5 bis 7 masse-%ige, z.B. eine 1,4 masse-%ige Alkali-Silicatlösung, z.B. Natriumsilicatlösung (verdünnte Wasserglaslösung mit molarem Verhältnis SiO₂:Na₂O = 3:1, entspricht Na₂Si₃O₇), die vorzugsweise langsam zugetropft wird. Das molare Verhältnis bei der Zugabe des Silicats (im angegebenen Beispiel des Natriumsilicats Na₂Si₃O₇)zu Eisenatomen der - in das Komposit einzubringenden - Nanopartikel sollte über 0,4, vorzugsweise bei 0,7 liegen. Diese Verfahrensführung hat gegenüber der Verwendung eines Silans auch noch den Vorteil, dass kein organisches Lösungsmittel benötigt wird.

Die Zugabe des Siliciumdioxid bildenden Agens' erfolgt bevorzugt unter Rühren oder mit einer anderen Methode, die eine Durchmischung der Bestandteile in der Lösung/Supension fördert und wenigstens durch ein turbulentes Zusammenfließen der Substanzen.

Um beim Zugeben der Wasserglaslösung eine Vergelung der Reaktionsmischung zu vermeiden, darf das molare Verhältnis von Silicat (bezogen auf das Anion Si₃O₇²⁻) zum jeweils eingesetzten komplexierenden Agens, z.B. einer Hydroxycarbonsäure, 0,2 nicht übersteigen. Um stabile SiO₂ Partikel zu bekommen, sollte das molare Verhältnis jedoch größer 0,07 sein.

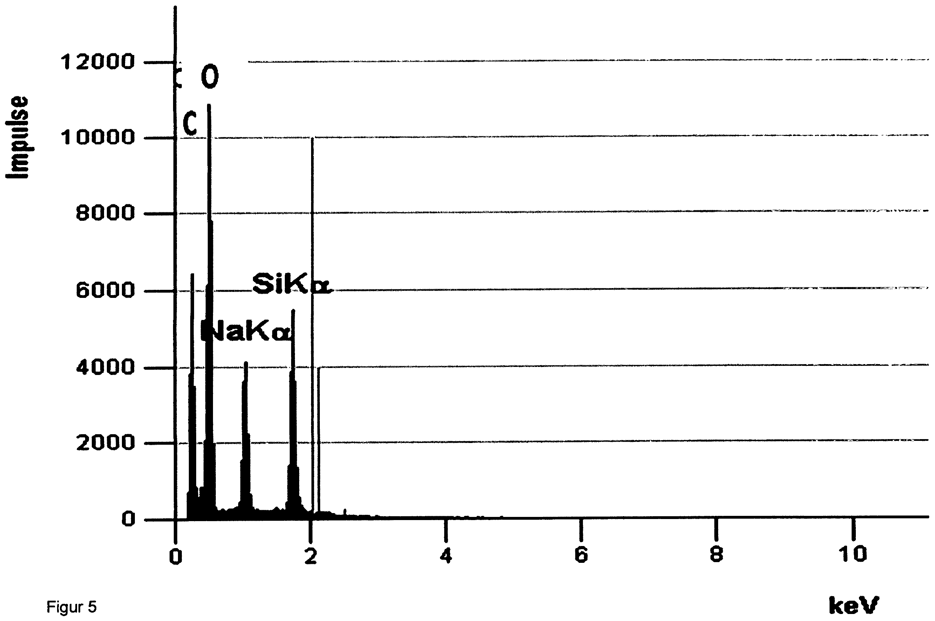

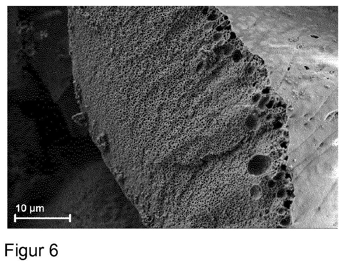

Nach Zutropfen der verdünnten Wasserglaslösung entstehen augenblicklich feste, stabile Mikropartikel, welche Nanopartikel mit reversiblen magnetischen Eigenschaften ("superparamagnetische Nanopartikel") enthalten. Dies ist unter anderem deshalb überraschend, weil ein Zutropfen einer Wasserglaslösung in reine Ammoniaklösung lediglich zu einer kurzzeitigen Flockung führt, welche bei weiterem Rühren bzw. Verdünnen der Lösung wieder aufgelöst wird. Wird Wasserglas dagegen nur in eine Säure wie HNO₃ gegeben, fällt ein nicht mehr wasserlösliches Natriumsilicat aus (EDX-Spektrum siehe Fig. 5). Dieses löst sich jedoch bei pH-Werten > 10 sehr rasch wieder auf. Erst ein Zusammenspiel der anwesenden, vorzugsweise anorganischen Anionen (z.B. Cl⁻, vorzugsweiseNO₃⁻) in einer ammoniakalischen bzw. aminhaltigen Lösung führt zur SiO₂-Bildung bei Zugabe einer Wasserglaslösung. Ohne an eine Theorie gebunden sein zu wollen, vermuten die Erfinder daher, dass die Anwesenheit der - vorzugsweise anorganischen - Anionen bei Zugabe des Siliciumdoxid bildenden Agens' bzw. bei dessen Zersetzung von entscheidender Bedeutung ist, also die gleichzeitige Anwesenheit von z.B. Nitrat-Anionen und Ammoniak. Nur in Gegenwart beider Ionentypen kann ein stabiler Feststoff gefällt werden. Dabei ist vorzugsweise die molare Menge an Ammoniak (aq) bzw. Amin größer als die der Säure (z.B. HNO₃ (aq)) und diese wiederum vorzugsweise größer als die des Wasserglases. Von ebenso großer Bedeutung ist die Anwesenheit des komplexierenden Agens' in großem Überschuss. Nur so bleiben die Nanopartikel dauerhaft in den Mikropartikeln gebunden, ohne dass später ein Auslösen der Nanopartikel beobachtet werden kann. Auch ein anderer Vergleichsversuch zeigt das Unerwartete an dem erfindungsgemäßen Fällungsprozess: Wird nämlich der erfindungsgemäße Prozess in Abwesenheit der magnetisierbaren Nanopartikel durchgeführt, entsteht anstelle von Mikropartikeln ein polsterartiges Material aus porösem SiO₂. Überraschend regelmäßige, wabenartige Porenstrukturen in µm bis mm großem partikulärem SiO₂ erhält man bei Durchführung des Prozesses bei Raumtemperatur (Fig. 6).

Wenn im erfindungsgemäßen Verfahren anstelle von Natriumsilicat ein Silan wie TEOS und/oder ein Alkyltrialkoxysilan eingesetzt und z.B. nach dem Stöber-Prozess zersetzt wird, erfordert die sorgfältige hydrolytische Kondensation (z.B. in Gegenwart von Ammoniak) einen wesentlich längeren Zeitraum. Die dabei entstehenden Partikel unterscheiden sich auch physisch von denjenigen, die man bei einer Fällung mit Wasserglas erhält, wie nachstehend näher erläutert wird. Dennoch führen beide Verfahrensvarianten zu sehr stabilen Produkten.

Die entstandenen Nano-/Mikro-Kompositpartikel werden - ggf. nach dem Abkühlen - mit einem Permanetmagneten abgetrennt und vorzugsweise gereinigt, z.B. mit Wasser oder Ethanol gewaschen. Als Ergebnis erhält man 1 bis 30 µm große Partikel aus einer SiO₂-Matrix mit eingeschlossenen, superparamagnetischen Eisenoxid-Nanopartikeln. Sofern eine Trocknung erforderlich ist, kann diese bei Raumtemperatur oder unter geringer Wärmezufuhr (vorzugsweise nicht über 80°C) erfolgen.

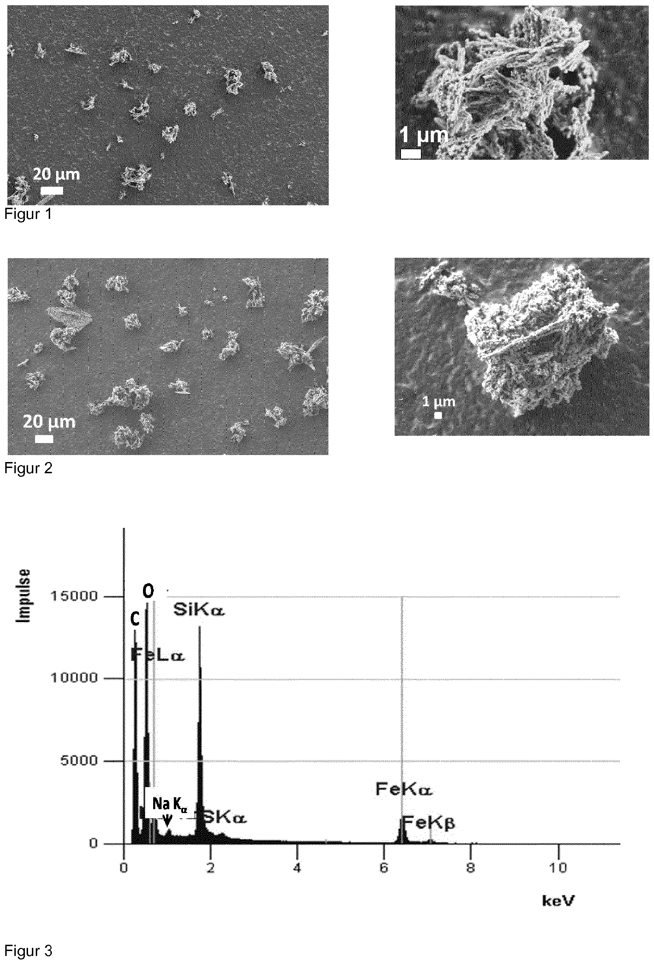

Ein Unterschied zwischen den nach den beiden Verfahrensvarianten erhaltenen Partikeln zeigt sich im Rasterelektronen-Mikroskop im Detail (Figuren 1 und 2): Man kann bei höherer Vergrößerung sehen, dass die mit Wasserglas gewonnenen Teilchen sehr filigran erscheinen, in ihrer Struktur sandrosenartig (Fig. 1), wohingegen die mit Hilfe von TEOS erhaltenen Teilchen dichter wirken (Fig. 2). BET-Messungen bestätigen diesen optischen Eindruck: Die mit Wasserglas gewonnenen Teilchen besitzen eine Oberfläche von ca. 10 bis 100 m²/g, häufig zwischen ca. 20 und 85 m²/g, die mit TEOS gewonnenen dagegen eine Oberfläche im Bereich von 1 bis 10 m²/g, meist bis 5 m²/g. Die hohe Oberfläche der mit Wasserglas hergestellten Teilchen ist dabei zumindest zum größeren Teil nicht dem Vorhandensein von Poren geschuldet; vielmehr beruht sie auf der filigranen Struktur der Teilchen, die mit einer sehr großen Außenoberfläche einhergeht. Unter Poren sind dabei Vertiefungen oder "Ausnehmungen" in der Hülle der Teilchen zu verstehen, deren Tiefe größer als ihr mittlerer Radius an der Oberfläche der Teilchen ist. Porenarme Teilchen mit einer hohen Außenoberfläche sind besonders günstig, weil sie eine hohe Fläche für die Anbindung von abzutrennenden Materialien zur Verfügung stellen können, die sich aufgrund der leichteren Zugänglichkeit im Vergleich zu in Poren angebundenen Materialien auch unaufwändig wieder davon ablösen lassen.

Überraschenderweise unterscheiden sich die auf die beiden unterschiedlichen Weisen gewonnenen Partikel dagegen in ihrer Zusammensetzung kaum: Denn auch die mit Wasserglas hergestellten Teilchen besitzen nur einen verschwindend geringen Anteil an Alkaliionen wie Natrium, nämlich unter 2 Gew.-%, meist unter 1 Gew.-%, gemessen als Na₂O, bezogen auf das Gesamtgewicht der Teilchen. Die mit TEOS hergestellten Teilchen enthalten natürlich in der Regel gar kein Natrium.

Auch hinsichtlich der Größe gibt es Übereinstimmungen, wie die beiden REM-Aufnahmen der Figuren 1 und 2 zeigen.

Die erfindungsgemäß hergestellten Partikel zeigen eine gute chemische Stabilität. Sie sind säurestabil (keine Veränderung nach 24 h Rühren in Lösungen mit pH = 1; keine Veränderung der gemessenen Partikeldurchmesser vor und nach der Lagerung der Partikel in rauchender HCl (37%ig, ca. 12N) für 2 Stunden; im Gegensatz dazu lösen sich unbeschichtete magnetische Metall- oder Metalloxidpartikel in Säuren innerhalb weniger Sekunden bis Minuten komplett auf. Auch konnte keine Nanopartikelfreisetzung bei hohen pH Werten nachgewiesen werden. Die Partikel sind auch noch nach 24 h Lagerung bei pH = 12 aus einer wässrigen Suspension gut magnetisch abtrennbar. Die verbleibende Lösung wurde chemisch analysiert. Zwar wurde darin ein merklicher Anteil von aufgelöstem SiO₂ gefunden; der freigewordene Eisenanteil betrug jedoch < 1Gew.-% des Gesamt-Eisens. Das bedeutet, dass die Beschichtung mit SiO₂ so dick und stabil ist, dass selbst der Verlust eines kleineren Teils davon die Stabilität der Partikel nicht beeinträchtigt.

Überraschenderweise zeigen die Partikel, die aus Wasserglas hergestellt wurden, im Vergleich zu Kompositpartikeln, die mit TEOS synthetisiert wurden, eine leicht erhöhte Alkali-Stabilität. Bei 24h Lagerung der Partikel bei einem pH-Wert von 13 betrug der freigewordene Eisenanteil nur 0,6 Gew.-% des Gesamt-Eisens bei den Wasserglas-Kompositpartikeln; bei den TEOS Partikeln jedoch 2,3 Gew.-%.

Die Partikel weisen auch eine gute mechanische Stabilität auf: die Partikelgrößen ändern sich nach 60 minütiger mechanischer Belastung in einem handelsüblichen Ultraschallbad nicht. Das Verfahren unter Einsatz von Wasserglas hat über die Entstehung von Teilchen mit sehr großer Oberfläche und den Kostenvorteil aufgrund billiger Ausgangsmaterialien hinaus einen weiteren Vorteil: Es lässt sich wegen der augenblicklichen Ausfällung der Mikropartikel als kontinuierliches Verfahren in einem Reaktor, z.B. in einem Rohrreaktor, durchführen. In solch einem kontinuierlichen Durchflusssystem läuft das stabilisierte, mit Ammoniak versetzte Nanopartikel-Sol mit der Wasserglaslösung zusammen, wobei bei dem Zusammentreffen der Materialien die Kompositpartikel entstehen, die am Ende des Reaktors magnetisch aus der Mutterlösung abgetrennt und gewaschen werden. Anders als beim Stöberprozess oder den Polymerisationsprozessen kann der gesamte Syntheseprozess in wässriger Lösung in einem solchen Reaktor bei leichter Erwärmung, z.B. auf ca. 80°C, in weniger als einer halben Stunde und mit nur einem Reinigungsschritt durchgeführt werden. Ein solches Verfahren wiederum erlaubt eine nach oben unbegrenzte Aufskalierbarkeit der herzustellenden Mengen. Damit ist dieses Verfahren gegenüber dem erfindungsgemäßen Verfahren, das mit der Ausfällung von SiO₂ nach dem Stöber-Prozess arbeitet, bevorzugt.

Die mit dem erfindungsgemäßen Verfahren erhältlichen Partikel besitzen gar keinen oder nur einen geringen organischen Anteil. In der Regel liegt dieser Anteil unter 7 Gew.-%, vorzugsweise unter 5,5 Gew.-%. Auch finden sich keine spektroskopischen Spuren wie C=O Schwingungen im FTIR, die man dem komplexierenden Agens zuordnen könnte. Es ist daher anzunehmen, dass das Siliciumdioxid bildende Agens das organische stabilisierende monomolekulare oder oligomere Agens zumindest zum größten Teil aus den Teilchen verdrängt hat.

Der anorganische Anteil der Teilchen besteht aus 40 bis 60 Gew.-% magnetischen bzw. magnetisierbaren Nanopartikeln und 60 bis 40 Gew.-% Siliciumoxid; der Anteil an Natrium, gemessen als Na₂O, liegt in der Regel unter 1 Gew.-%, bevorzugt unter 0,5 Gew.-%. Im EDX-Spektrum (siehe Fig. 3) ist dementsprechend nur ein sehr kleiner Peak bei etwa 0,5 KeV zu erkennen. Bei reinem Natriumsilicat wäre dieser mindestens 1/3 so hoch wie der von Si.

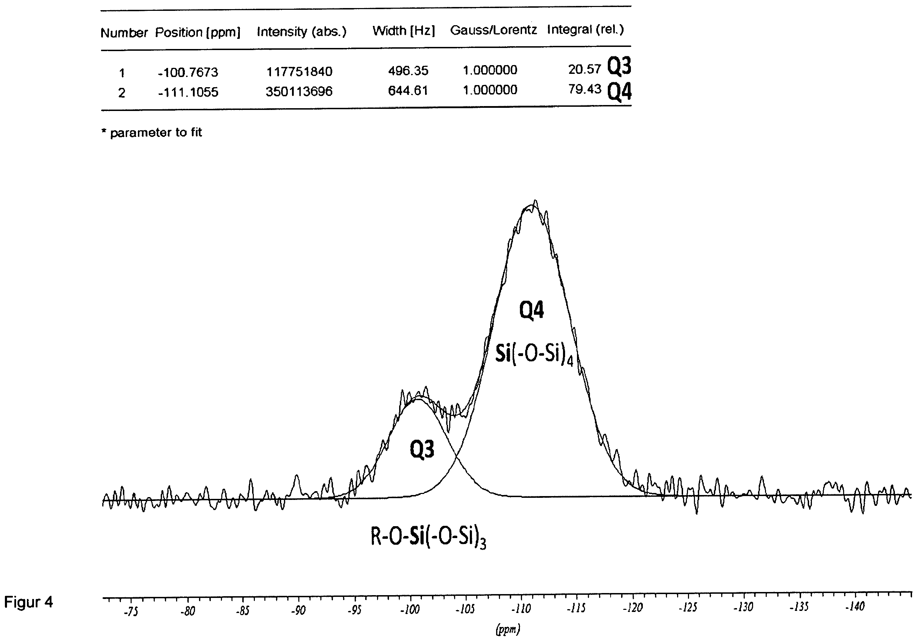

Die Si-NMR-Spektroskopie (Fig. 4) zeigt, dass die SiO₂-Matrix auch bei Verwendung von Wasserglas im Herstellungsverfahren vor allem aus SiO₄-Tetraedern besteht. Die vierfache Verknüpfung eines Si Atoms vorliegend als Si(-O-Si)₄ entspricht dem in Fig. 4 dominanten "Q4" Signal um -111ppm. Daneben existieren Si(-O-Si)₃ -Gruppen ("Q3" Signal um 100ppm), bei denen die vierte Bindung des Si Atoms mit einem anderen Atom über eine O-Brücke verknüpft ist. Das Spektrum entspricht einem typischen amorphen SiO₂-Spektrum. Somit besteht das hergestellte Material also im Wesentlichen oder sogar vollständig aus SiO₂. Dies steht auch im Einklang mit der chemischen Analyse der Teilchen.

Die erfindungsgemäß hergestellten Partikel sind trotz ihrer Mikrometergröße superparamagnetisch und haben eine Sättigungsmagnetisierung von 30-35 emu/g, was eine sehr gute magnetische Abtrennung ermöglicht. Dies dürfte daran liegen, dass die Partikel aus einer Vergesellschaftung von "Plättchen" im Nanometerbereich bestehen, welche über die Siliciumoxid-Matrix so verbunden sind, dass die Partikel eine hohe äußere Hülloberfläche ("Kubatur") erhalten, was auch zu der oben angesprochenen, deutlich erhöhten Oberfläche im Vergleich zu den kompakteren, meist kugelförmigen Partikeln des Standes der Technik führt. Die gute Abtrennbarkeit wird insbesondere bei durch die Wasserglas-Methode erhaltenen Teilchen durch deren Größe (im Mittel um 20µm) weiter unterstützt.

Die mit dem beschriebenen Prozess hergestellten Nano/Mikro-Kompositpartikel eignen sich wegen ihrer SiO₂-Oberflächen für weitere Funktionalisierungen und damit für zahlreiche, unterschiedliche Anwendungen. Eine Oberflächenmodifizierung der Partikeloberfläche ist grundsätzlich auf Basis von molekularer, oligomerer, polymerer oder partikulärer Basis möglich. Die dazu verwendbaren Verfahren sind aus dem Stand der Technik bekannt. Insbesondere ist die Silanisierung der Partikeloberfläche mit funktionellen Silanen (XₙSiR₄₋ₙ; n = 1, 2, 3) möglich. Diese können über hydrolysierbare und kondensierbare Gruppen (X: z. B. Alkoxy, Chlorid) an Silanolgruppen der Partikeloberfläche anbinden. Die funktionellen Gruppen R sind dann über nichthydrolysierbare Si-C-Bindungen mit der Partikeloberfläche verbunden.

Die beschriebenen Nano/Mikro-Kompositpartikel können in der Wassertechnik sowie in der Biochemie und -medizin für Separationsaufgaben zum Einsatz kommen. Durch eine gute Modifizierbarkeit der Partikeloberflächen dank der SiO₂-Matrix wie oben beschrieben sind Ankerstellen für zahlreiche Targetverbindungen möglich. Aufgrund ihrer relativ geringer Dichte und kleinen Korngröße sind die Partikel wie erwähnt leicht in Suspension zu halten, was die Reaktion mit derartigen Targetverbindungen deutlich erleichtert. Ihre gute Magnetisierbarkeit ermöglicht ein einfaches Abtrennen im Magnetfeldgradienten in kurzen Zeiten (wenige Minuten). Aufgrund der genannten Eigenschaften können die Partikel z.B. eine interessante Ausgangsbasis für Rohstoff-Recycling aus Fluiden darstellen, ein Thema das von aktuellem gesellschaftlichem und wirtschaftlichem Interesse ist.

Nachstehend soll die Erfindung anhand von Ausführungs- und Vergleichsbeispielen näher erläutert werden.

Die Oberfläche der Teilchen wurde mit Hilfe der BET-Methode bestimmt (DIN 66131). Die durchschnittliche Teilchengröße wurde anhand von REM-Aufnahmen abgeschätzt, sowie durch Fraunhoferbeugung in Suspension gemessen. Hydrodynamische Radien der Nanopartikelsuspensionen wurden mit dynamischer Lichtstreuung (DLS) gemessen.

### Beispiel 1

### Herstellung magnetisch abtrennbarer Partikel mit Hilfe von Natriumsilicat-Fällung

Als Ausgangsmaterialien wurden folgende Chemikalien verwendet:
Eisen(III)chlorid Hexahydrat (FeCl₃·6H₂O, 99%+, Sigma-Aldrich),
Eisen(II)chlorid Tetrahydrat (FeCl₂·4H₂O, 99%+, Sigma-Aldrich),
wässrige Ammoniumhydroxid Lösung (NH₄OH, 28-30 wt%, Sigma-Aldrich),
wässrige Salpetersäure Lösung (HNO₃, 1 M, Sigma-Aldrich),
Milchsäure (DL, 90%, Sigma-Aldrich, alternativ L(+), 80%, Fischar),
Natronwasserglas (36%, SiO₂/Na₂O>3,2, Fischar),
Äpfelsäure (DL, 99%, Sigma-Aldrich).

8,68 g (32 mmol) FeCl₃·6H₂O und 3,2 g (16 mmol) FeCl₂·4H₂O wurden in 400ml destilliertem Wasser gelöst (bei 20°C an Luft). 24 ml der Ammoniumhydroxid Lösung wurden unter starkem Rühren rasch zugegeben. Die 5 bis 15 nm großen magnetischen Nanopartikel, die sich instantan bilden, liegen zunächst als ca. 1 bis 200 µm große, undefinierte Agglomerate vor. Diese werden ein- bis dreimal mit 50ml destilliertem Wasser gewaschen. Dazu können die Agglomerate aus der Waschlösung jeweils mittels eines Magneten abgetrennt werden, was den Waschprozess stark vereinfacht. Anschließend werden 160 ml 0,5M HNO₃ zugegeben. Es resultiert ein Eisenoxid-Sol, das alle Eigenschaften eines Ferrofluids zeigt.

Zu dem Sol werden im Überschuss 40ml (Sigma-Aldrich) bzw. 44ml (Fischar) Milchsäure oder 4g Äpfelsäure und daraufhin wässrige Ammoniak-Lösung (80ml 28% NH₃ verdünnt mit 160ml destilliertem Wasser) zugegeben, so dass ein pH-Wert von über 10 erreicht ist. Sodann wird das Sol auf 80°C erwärmt.

Unter Rühren wird eine verdünnte Natriumsilikatlösung, hergestellt durch Vermischen von 16 ml einer 36 masse-%igen Natriumsilikatlösung (molares Verhältnis von SiO₂:Na₂O = 3:1) mit 400 ml destilliertem Wasser, langsam zugetropft. Dabei entstehen augenblicklich feste, stabile Mikropartikel, welche jeweils eine Vielzahl von superparamagnetischen Nanopartikeln enthalten. Nach dem Abkühlen der Mischung werden diese mit Hilfe eines Permanentmagneten abgetrennt und mit destilliertem Wasser dreimal gewaschen. Zwei rasterelektronenmikroskopische Aufnahmen der Teilchen sind in Fig. 1 dargestellt; sie haben einen stark unterschiedlichen Durchmesser im Bereich zwischen etwa 5 und 40 µm; der durchschnittliche Durchmesser in wenigstens einer Richtung liegt bei ca. 20µm. Die BET-Messung ergab eine Oberfläche von ca. 75 m²/g.

### Vergleichsbeispiel 1

### Herstellung magnetisch abtrennbarer Partikel unter Stabilisierung mit einem Polycarboxylatether-Polymer

Beispiel 1 wurde mit der Änderung wiederholt, dass anstelle von Milchsäure MELPERS4343 der BASF AG, Deutschland, zugegeben wurde (120mg einer 42,9 Masse%-igen, wässrigen Polymerlösung). Dabei entstehen filigrane, 20-30 µm große Partikel mit einer Oberfläche von ca. 100 m²/g. Bei Lagerung in Wasser und magnetischem Abtrennen nach Aufschütteln zeigt sich rasch eine Verfärbung des Wassers, was auf ein Freiwerden von Kleinstbestandteilen aus den Partikeln hindeutet. Sowohl aus ästhetischen Gründen (Verfärbung von Fluiden die mit den Partikeln in Kontakt kommen) als auch aus sicherheitstechnischen Gründen (Gefahr der Freisetzung von Nanopartikeln) sind diese Partikel nicht vorteilhaft im Hinblick auf Anwendungen in Fluiden wie Trink- oder Abwässern.

Zudem wurde bei den Partikeln, nachdem sie 24 Stunden bei pH 2 bzw. pH12 gerührt und dann magnetisch abgetrennt worden waren, in der verbleibenden pH Lösung ein 6-fach (für pH2) bzw. 12-fach (bei pH12) höherer Eisengehalt in Lösung gemessen im Vergleich zu den in der Erfindung beanspruchten Partikeln, die z.B. Milchsäure enthalten (Beispiel 1).

### Vergleichsbeispiel 2

### Natriumsilicat-Fällung ohne magnetisierbare Nanopartikel

Beispiel 1 wurde wiederholt, wobei jedoch anstelle des Eisenoxid-Sols eine verdünnte HNO₃-Lösung eingesetzt wurde. Bei Zugabe der Natriumsilicatlösung (wie in Beispiel 1, aber unverdünnt) in eine auf ca. 80°C erwärmte Lösung entstanden µm- bis millimetergroße Klumpen eines kissenartigen, sehr porösen Material aus SiO₂. Bei Zugabe in eine Lösung bei Raumtemperatur entstanden gleich große Klumpen, allerdings mit einer sehr regelmäßigen, wabenartigen Porenstruktur (Fig. 6).

### Beispiel 3

### Halbkontinuierliche Herstellung magnetisch abtrennbarer Partikel mit Hilfe von Natriumsilicat-Fällung

Dieses Beispiel zeigt die prinzipielle Eignung des Herstellungsverfahrens für einen kontinuierlichen Durchgang. Die Partikelbildung (sowohl die Nanopartikel, als auch die Kompositmikropartikel) erfolgt dabei in einem Y-förmigen Rohr, in dem zwei Reaktionslösungen zusammenlaufen. Die genaue Auslegung der Geometrie des Y-Rohrs ist dabei relativ unwesentlich; entscheidend ist aber, dass die Durchflussgeschwindigkeit so gewählt wird, dass in dem verwendeten Y-Rohr eine Durchmischung der beiden Reaktionslösungen aufgrund turbulenten Fließverhaltens gegeben ist. Durch entsprechendes Design des Reaktorstücks kann die Vermischung (Verwirbelung) optimiert werden.

Die gleichen Chemikalien wie in Beispiel 1 wurden verwendet. In einem Y-Rohr mit Durchmesser 5-8mm wurden zunächst die Nanopartikel hergestellt. Hierzu wurden 17,36g (64mmol) FeCl₃·6H₂O und 6,4g (32mmol) FeCl₂·4H₂O in 200ml H₂O gelöst. Diese Lösung wurde mit 100ml/min in das Y-Rohr gepumpt und dort zeitgleich mit einer Lösung aus 200ml Wasser mit 40ml 28%NH₃ bei gleicher Durchflussstärke zusammengebracht. Das abfließende Produkt wurde in einem Becherglas gesammelt. Die magnetischen Agglomerate wurden entweder gewaschen (vgl. Beispiel 1) = Variante 1, oder die Lösung wurde belassen wie sie war = Variante 2.

In Variante 1 wurden die Nanopartikelagglomerate mit 320ml 0,5M HNO₃ (Sigma-Aldrich), 80ml Milchsäure (Sigma-Aldrich), 160ml wässriger Ammoniaklösung (Sigma-Aldrich) und 560ml destilliertem Wasser vermengt und auf 80°C erhitzt.

In einer Minute wurden jeweils 100ml dieses Edukts mit 100ml/min Durchflussstärke im Y-Rohr mit einer Wasserglaslösung (2ml 36 masse-%ige Wasserglaslösung mit 100ml destilliertem Wasser verdünnt) zusammengepumpt. Das ablaufende Reaktionsprodukt mit den Kompositpartikel gemäß der Erfindung wurde dreimal mit Wasser gewaschen (mittels magnetischer Abtrennung).

In Variante 2 wurden die Nanopartikelagglomerate ungewaschen in der Reaktionslösung belassen und mit 120 ml 1M HNO₃, 80ml Milchsäure und 240ml destilliertem Wasser versetzt (dies kann im weiteren Durchfluss in einem Rohrreaktor geschehen). Die Suspension wurde auf 60°C-80°C erhitzt; 80ml 28% Ammoniaklösung wurde zugegeben.

In einer Minute wurden jeweils 100ml dieses Edukts mit 100ml/min Durchflussstärke im Y-Rohr mit einer Wasserglaslösung (2ml-4ml 36 masse-%ige Wasserglaslösung mit 100ml destilliertem Wasser verdünnt) zusammengepumpt. Das ablaufende Reaktionsprodukt, die magnetischen Kompositpartikel der Erfindung, wurden dreimal mit Wasser gewaschen (mittels magnetischer Abtrennung).

Erläuterungen zu den Figuren:
Figur 1 zeigt Rasterelektronenmikroskopie-Aufnahmen der Kompositpartikel, hergestellt aus Wasserglas als SiO₂-Vorstufe.
Figur 2 zeigt Rasterelektronenmikroskopie-Aufnahmen der Kompositpartikel, hergestellt aus TEOS als SiO₂-Vorstufe.
Figur 3 zeigt ein EDX-Spektrum des gebildeten Komposits aus Wasserglas gemäß einer bevorzugten Variante des erfindungsgemäßen Verfahrens. Obwohl ein Natriumsilikat eingesetzt wurde, ist kaum Natrium mehr vorhanden, und es liegt vielmehr ein SiO₂-Matrix- Eisenoxid-Nanopartikel-Komposit vor.
Figur 4 zeigt das Si-NMR Spektrum des SiO₂-Materials der erfindungsgemäßen Teilchen, wobei die Herstellung unter Verwendung von Wasserglas bewirkt wurde. Es zeigt sich ein gut verknüpftes SiO₂ Netzwerk, typisch für amorphes SiO₂.
Figur 5 zeigt das EDX-Spektrum einer Ausfällung eines Natriumsilikats nur mit HNO₃.
Figur 6 zeigt die Rasterelektronenmikroskopie-Aufnahme eines gleichmäßig porösen SiO₂, ausgefällt aus Wasserglas gemäß Vergleichsbeispiel 2.

## Patentansprüche

1. Magnetisch abtrennbare Partikel, umfassend jeweils eine Mehrzahl von Nanopartikeln mit reversiblen magnetischen Eigenschaften und eine Matrix, die einen anorganischen Anteil zwischen 70 und 100 Gew.-%, bezogen auf das Matrix-Gewicht, aufweist, wobei der anorganische Anteil der Matrix zu 80 bis 100 Gew.-% aus SiO₂ besteht,
**dadurch gekennzeichnet, dass**
a. die Partikel einen durchschnittlichen Durchmesser in wenigstens einer Richtung von mindestens 5 µm aufweisen,
b. die Partikel eine Oberfläche (gemäß BET-Messung) von mindestens 10 m²/g und ein (kumulatives) Porenvolumen von weniger als 0,195 cm³/g (ml/g) besitzen,
c. ein Verlust an Material aus den Nanopartikeln mit reversiblen magnetischen Eigenschaften von weniger als 2 Gew.-% bei 12-stündigem Rühren der magnetisch abtrennbaren Partikel in sauren und alkalischen Lösungen mit einem pH-Wert von 1 bzw. von 12 eintritt.

2. Magnetisch abtrennbare Partikel nach Anspruch 1, worin die magnetisierbaren Nanopartikel aus Eisenoxid, insbesondere aus Magnetit und/oder Maghemit bestehen.

3. Magnetisch abtrennbare Partikel nach Anspruch 1 oder 2 mit folgender Zusammensetzung:
- Anteil der magnetischen oder magnetisierbaren Nanopartikel: 30 bis 70 Gew.-%
- Anteil der Matrix: 70 bis 30 Gew.-%,
- anorganischer Anteil der Matrix, bezogen auf das Gesamtgewicht der Matrix: 85 bis 100%.

4. Magnetisch abtrennbare Partikel nach Anspruch 3 mit folgender Zusammensetzung:
- Anteil der magnetischen oder magnetisierbaren Nanopartikel: 40 bis 55 Gew.-%
- Anteil der Matrix: 60 bis 45 Gew.-%
- Anteil an Siliciumdioxid im anorganischen Anteil der Matrix: 95 bis 100 Gew.-%

5. Magnetisch abtrennbare Partikel nach Anspruch 3 oder 4, mit folgender Zusammensetzung:
- Anteil der magnetischen oder magnetisierbaren Nanopartikel: 43 bis 50 Gew.-%,
- Anteil an Siliciumdioxid: 45 bis 53 Gew.-%
- Anteil an Alkalimetall, gemessen als Alkalioxid (M₂O): 0 bis 1 Gew.-%
- Anteil an organischem Material und/oder Wasser: 0 bis 7 Gew.-%.

6. Magnetisch abtrennbare Partikel nach einem der voranstehenden Ansprüche, bel denen die Matrix auf Ihrer Oberfläche funktionelle Gruppen trägt, die über Si-C-Bindungen angebunden sind.

7. Magnetisch abtrennbare Partikel nach Anspruch 6, worin die funktionellen Gruppen über eine Silanisierung der Matrix-Oberfläche an diese angebunden wurden,

8. Magnetisch abtrennbare Partikel nach einem der voranstehenden Ansprüche mit einer Oberfläche von mindestens 20 m²/g.

9. Verfahren zum Herstellen magnetisch abtrennbarer Partikel nach einem der Ansprüche 1 bis 8, umfassend die Schritte:
a. Bereitstellen eines fluiden magnetischen Sols, das durch Absenkung des pH-Wertes mit Hilfe des Zusatzes einer Säure auf einen Wert von nicht über pH 2,5 peptisiert wurde,
b. Stabilisieren des Sols durch Zugabe eines organischen, komplexlerenden Agens,
c. Zugabe von Ammoniak oder einer Verbindung, die mindestens eine Aminfunktion aufweist oder bei Einwirkung von thermischer Energie eine solche freisetzt, zu dem stabilisierten Sol in einer Menge, dass - ggf. nach Einwirkung der erforderlichen thermischen Energie - ein pH-Wert von mindestens 9 reicht wird; und
d. Bewirken einer Fällung der magnetisch abtrennbaren Partikel durch Zugabe eines Siliciumdioxid bildenden Agens zu dem stabilisierten Sol,
wobei entweder das organische komplexierende Agens ausgewählt Ist unter monomeren und oligomeren Hydroxycarbonsäuren mit 1 bis 3 Hydroxy- und 1 bis 3 Carbonsäurefunktionen, Di- oder Oligocarbonsäuren und Bis- oder Oligoalkoholen mit maximal 8 zur Komplexbildung geeigneten funktionellen Gruppen, oder das organische komplexierende Agens derart ausgewählt Ist, dass sich nach Zugabe des Ammoniak gemäß Schritt c, ein gemessener hydrodynamischen Radius der im Sol befindlichen Partikel Im Bereich von 200 bis 2000 nm, vorzugsweise von 500 bis 2000 einstellt.

10. Verfahren nach Anspruch 9, worin das Silicium bildende Agens ein wasserlösliches Silikat, vorzugsweise mit einer Zusammensetzung von Siliciumdioxid zu Alkalimetalloxid im Bereich zwischen 4:1 und 1:1, besonders bevorzugt von etwa 3:1 Ist.

11. Verfahren nach Anspruch 10, worin als Silicat ein 2- bis 5-masse%iges Silicat in wässriger Lösung eingesetzt wird und/oder dass das molare Verhältnis der Silicationen Si₃O₇²⁻ zum organischen, komplexierenden Agens im Bereich von 0,07 bis 0,2 liegt.

12. Verfahren nach einem der Ansprüche 9 bis 11, worin das organische, komplexierende Agens ausgewählt ist unter Milchsäure und Äpfelsäure.

13. Verfahren nach einem der Ansprüche 9 bis 12, **dadurch gekennzeichnet, dass** das organische, komplexierende Agens In wenigstens 6-fachem molarem Übersohuss eingesetzt wird, bezogen auf den Metallatom- oder ionengehalt Im fluiden magnetischen Sol.

14. Verfahren nach einem der Ansprüche 9 bis 13, **dadurch gekennzeichnet, dass** in Schritt a. als Säure HNO₃ eingesetzt wird und dass in Schritt c. Ammoniak verwendet wird.

15. Verwendung magnetisch abtrennbarer Partikel nach einem der Ansprüche 1 bis 8 zum Abtrennen einer in einem Fluid vorhandenen Komponente, Insbesondere in der Wassertechnik, der Biochemie und der Biomedizin,

## Claims

1. Magnetically separable particles each comprising a plurality of nanoparticles having reversible magnetic properties and a matrix having an inorganic content of between 70 and 100% by weight based on the matrix weight, the inorganic content of the matrix consisting of 80 to 100% by weight of SiO₂, **characterised in that**
a.the particles have an average diameter in at least one direction of at least 5 µm,
b.the particles have a surface area (according to BET measurement) of at least 10 m²/g and a (cumulative) pore volume of less than 0.195 cm³/g (ml/g),
c.a loss of material from the nanoparticles having reversible magnetic properties is less than 2% by weight when the magnetically separable particles are stirred for 12 hours in acidic and alkaline solutions having a pH of 1 or 12.

2. The magnetically separable particles according to claim 1, wherein the magnetizable nanoparticles consist of iron oxide, in particular of magnetite and/or maghemite.

3. The magnetically separable particles according to claim 1 or 2 having the following composition:
- a content of magnetic or magnetizable nanoparticles: 30 to 70% by weight
- a content of the matrix: 70 to 30% by weight,
- an inorganic content of the matrix, based on the total weight of the matrix:
85 to 100%.

4. The magnetically separable particles according to claim 3 having the following composition:
- a content of magnetic or magnetisable nanoparticles: 40 to 55 % by weight
- a content of the matrix: 60 to 45 % by weight
- a content of silicon dioxide in the inorganic part of the matrix: 95 to 100% by weight.

5. The magnetically separable particles according to claim 3 or 4, having the following composition:
- a content of magnetic or magnetizable nanoparticles: 43 to 50% by weight,
- a silicon dioxide content: 45 to 53 % by weight
- an alkali metal content, measured as alkali oxide (M2O): 0 to 1 % by weight
- a content of organic material and/or water: 0 to 7 % by weight.

6. The magnetically separable particles according to one of the above requirements, in which the matrix carries functional groups linked by Si-C bonds on its surface.

7. The magnetically separable particles according to claim 6, wherein the functional groups have been linked to the matrix surface via silanization of the matrix surface.

8. The magnetically separable particles according to any of the foregoing with a surface area of at least 20 m²/g.

9. A process for preparing magnetically separable particles according to any of claims 1 to 8, comprising the steps:
a.providing a fluid magnetic sol which has been peptised by lowering the pH to a value not exceeding pH 2,5 by the addition of an acid,
b.stabilizing the sol by addition of an organic complexing agent,
c.adding ammonia or a compound having at least one amine function or releasing an amine function upon exposure to thermal energy to the stabilized sol in an amount such that, optionally after exposure to the required thermal energy, a pH of at least 9 is sufficient; and
d.causing the precipitation of the magnetically separable particles by adding a silicium dioxide-forming agent to the stabilized sol,
where either the organic complexing agent is selected from monomeric and oligomeric hydroxycarboxylic acids having 1 to 3 hydroxy and 1 to 3 carboxylic acid functions, di- or oligocarboxylic acids and bis- or oligoalcohols having a maximum of 8 functional groups suitable for complex formation, or the organic complexing agent is selected such that, after addition of the ammonia in step c., a measured hydrodynamic radius of the particles present in the sol is obtained in the range from 200 to 2000 nm, preferably from 500 to 2000.

10. The process according to claim 9, wherein the silicon-forming agent is a water-soluble silicate, preferably having a composition of silica to alkali metal oxide in the range between 4:1 and 1:1, more preferably about 3:1.

11. The process according to claim 10, in which a 2- to 5-mass% silicate in aqueous solution is used as silicate and/or the molar ratio of the silicate ions Si₃O₇²⁻ to the organic complexing agent is in the range from 0.07 to 0.2.

12. The process according to any one of Claims 9 to 11 wherein the organic complexing agent is selected from lactic acid and malic acid.

13. The process according to one of claims 9 to 12, **characterized in that** the organic complexing agent is used in at least 6-fold molar excess, based on the metal atom or ion content in the fluid magnetic sol.

14. The process according to one of claims 9 to 13, **characterized in that** HNO₃ is used as acid in step a. and that ammonia is used as acid in step c.

15. The use of magnetically separable particles according to any of Claims 1 to 8 to separate a component present in a fluid, particularly in water engineering, biochemistry and biomedicine.

## Revendications

1. Particules séparables magnétiquement, comprenant une pluralité de nanoparticules respectives possédant des propriétés magnétiques réversibles et une matrice qui présente une fraction inorganique comprise entre 70 et 100 % en poids par rapport au poids de la matrice, la fraction inorganique de la matrice se composant de 80 à 100 % en poids de SiO₂, **caractérisées en ce que**
a. les particules présentent un diamètre moyen d'au moins 5 µm dans au moins une direction,
b. les particules possèdent une superficie (mesurée selon BET) d'au moins 10 m²/g et un volume de pores de moins de 0,195 cm³/g (ml/g),
c. une perte de matière des nanoparticules à propriétés magnétiques réversibles inférieure à 2 % en poids survient après agitation des particules séparables magnétiquement pendant 12 heures dans des solutions acides et alcalines présentant respectivement un pH de 1 et de 12.

2. Particules séparables magnétiquement selon la revendication 1, dans lesquelles les nanoparticules magnétisables se composent d'oxyde de fer, en particulier de magnétite et/ou de maghémite.

3. Particules séparables magnétiquement selon la revendication 1 ou 2, présentant la composition suivante:
- fraction des nanoparticules magnétiques ou magnétisables: 30 à 70 % en poids,
- fraction de la matrice: 70 à 30 % en poids,
- fraction inorganique de la matrice, rapportée au poids total de la matrice: 85 à 100 %.

4. Particules séparables magnétiquement selon la revendication 3, présentant la composition suivante:
- fraction des nanoparticules magnétiques ou magnétisables: 40 à 55 % en poids,
- fraction de la matrice: 60 à 45 % en poids,
- fraction de dioxyde de silicium dans la fraction inorganique de la matrice: 95 à 100 % en poids.

5. Particules séparables magnétiquement selon la revendication 3 ou 4, présentant la composition suivante:
- fraction des nanoparticules magnétiques ou magnétisables: 43 à 50 % en poids,
- fraction de dioxyde de silicium: 45 à 53 % en poids,
- fraction de métal alcalin, mesurée sous forme d'oxyde alcalin (M₂O): 0 à 1 % en poids,
- fraction de matière organique et/ou d'eau: 0 à 7 % en poids.

6. Particules séparables magnétiquement selon l'une quelconque des revendications précédentes, dans lesquelles la matrice porte sur sa surface des groupes fonctionnels, qui sont liés par des liaisons Si-C.

7. Particules séparables magnétiquement selon la revendication 6, dans lesquelles les groupes fonctionnels ont été liés à la surface de la matrice par une silanisation de celle-ci.

8. Particules séparables magnétiquement selon l'une quelconque des revendications précédentes, présentant une surface d'au moins 20 m²/g.

9. Procédé de préparation de particules séparables magnétiquement selon l'une quelconque des revendications 1 à 8, comprenant les étapes suivantes:
a. préparation d'un sol magnétique fluide, qui a été peptisé par abaissement de son pH à une valeur ne dépassant pas 2,5 par l'addition d'un acide,
b. stabilisation du sol par ajout d'un agent complexant organique,
c. ajout d'ammoniac ou d'un composé qui présente au moins une fonction amine ou qui libère une telle fonction en réponse à l'application d'énergie thermique, au sol stabilisé, en une quantité permettant, le cas échéant après application de l'énergie thermique requise, l'obtention d'un pH d'au moins 9, et
d. réalisation d'une précipitation des particules séparables magnétiquement par ajout d'un agent générateur de dioxyde de silicium au sol stabilisé,
dans lequel ou bien l'agent complexant organique est choisi parmi les acides hydroxycarboxyliques monomères ou oligomères comprenant 1 à 3 fonctions hydroxy et 1 à 3 fonctions acide carboxylique, les acides dicarboxyliques ou oligocarboxyliques et les bis-alcools ou oligo-alcools comprenant au maximum 8 groupements fonctionnels aptes à former des complexes, ou bien l'agent complexant organique est choisi de telle manière qu'après l'ajout d'ammoniac selon l'étape c., un rayon hydrodynamique mesuré des particules présentes dans le sol compris dans une plage de 200 à 2000 nm, de préférence de 500 à 2000 nm, soit créé.

10. Procédé selon la revendication 9, dans lequel l'agent générateur de silicium est un silicate hydrosoluble, présentant de préférence une composition de dioxyde de silicium à l'oxyde de métal alcalin comprise dans la plage de 4:1 à 1:1, notamment de préférence d'environ 3:1.

11. Procédé selon la revendication 10, dans lequel on utilise comme silicate un silicate à 2 à 5 % en masse en solution aqueuse et/ou en ce que le rapport molaire des ions silicate Si₃O₇⁻² à l'agent complexant organique se situe dans la plage de 0,07 à 0,2.

12. Procédé selon l'une quelconque des revendications 9 à 11, dans lequel l'agent complexant organique est choisi parmi l'acide lactique et l'acide malique.

13. Procédé selon l'une quelconque des revendications 9 à 12, **caractérisé en ce que** l'on utilise l'agent complexant organique avec un excès molaire d'au moins 6 fois, rapporté à la teneur en atomes ou en ions métalliques dans le sol magnétique fluide.

14. Procédé selon l'une quelconque des revendications 9 à 13, **caractérisé en ce que** l'on utilise à l'étape a., comme acide, du HNO₃ et **en ce que** l'on utilise à l'étape c. de l'ammoniac.

15. Utilisation de particules séparables magnétiquement selon l'une quelconque des revendications 1 à 8 pour la séparation d'un composant présent dans un fluide, en particulier dans la technique de l'eau, la biochimie et la biomédecine.
